# EUROPEAN PATENT APPLICATION

(11) **EP 4 538 832 A1**
(43) Date of publication of application: **16.04.2025**
(21) Application number: 23857564.1
(22) Date of filing: 13.07.2023
(51) Int. Cl.: G06F 3/01, H04W 4/80, G06F 3/04842, G06F 3/04817, G06F 3/0482, G06T 19/00, G02B 27/01, G06F 3/04815

(54) **METHOD FOR CONTROLLING VIRTUAL REALITY DEVICE, AND VIRTUAL REALITY DEVICE USING SAME**

(30) Priority: 25.08.2022 KR 20220107162; 05.10.2022 KR 20220127172
(71) Applicant: Samsung Electronics Co., Ltd., Suwon-si, Gyeonggi-do 16677 (KR)
(72) Inventor: YOO, Jinseon, Suwon-si, Gyeonggi-do 16677 (KR); KANG, Seokyoung, Suwon-si, Gyeonggi-do 16677 (KR); KUK, Sungbin, Suwon-si, Gyeonggi-do 16677 (KR); LEE, Joayoung, Suwon-si, Gyeonggi-do 16677 (KR)
(74) Representative: Gulde & Partner
(86) International application number: PCT/KR2023/010022
(87) International publication number: WO 2024/043527

(57) **Abstract**

Provided are a method of controlling a virtual reality device, and the virtual reality device, the method including setting a first area and a second area different from the first area in a space in which content is viewed, based on scanned space information about the space in which the content is viewed and content information about the content, sensing the first area and the second area by using at least one image sensor, tracking an object located in the first area or the second area, based on a result of the sensing, and controlling screen display of the virtual reality device, based on a result of the tracking.

## Description

### Technical Field

Provided are a method of controlling a virtual reality device, and the virtual reality device using the same.

### Background Art

Virtual reality refers to showing a virtual image that may be experienced like reality in a virtual space. A virtual reality device indicates a device capable of expressing 'virtual reality', and may include a head-mounted display device, a virtual reality helmet, or a goggles-type display device completely covering a user's field of view.

### Disclosure

### Technical Solution

According to an embodiment of the present disclosure, a method of controlling a virtual reality device is provided. The method of controlling the virtual reality device may include setting a first area and a second area different from the first area in a space in which content is viewed, based on scanned space information about the space in which the content is viewed and content information about the content. Also, the method of controlling the virtual reality device may include sensing the first area and the second area by using at least one image sensor. Also, the method of controlling the virtual reality device may include tracking an object located in the first area or the second area, based on a result of the sensing. Also, the method of controlling the virtual reality device may include controlling screen display of the virtual reality device, based on a result of the tracking.

According to an embodiment of the present disclosure, a computer-readable recording medium having recorded thereon a program for executing the method may be provided.

According to an embodiment of the present disclosure, a virtual reality device is provided. The virtual reality device may include a memory storing one or more instructions, a processor, at least one image sensor, a display engine, and a display. The processor is configured to execute the one or more instructions to set a first area and a second area different from the first area in a space in which content is viewed, based on scanned space information about the space in which the content is viewed and content information about the content. Also, the processor is configured to execute the one or more instructions to sense the first area and the second area by using the at least one image sensor. Also, the processor is configured to execute the one or more instructions to track an object located in the first area or the second area, based on a result of the sensing. Also, the processor is configured to execute the one or more instructions to control screen display of the virtual reality device by using the display engine and the display, based on a result of the tracking.

### Description of Drawings

FIG. 1 is a diagram illustrating a virtual reality device controlling screen display of the virtual reality device when an object approaches while a user wearing the virtual reality device watches content via the virtual reality device, according to an embodiment of the present disclosure.
FIG. 2 is a flowchart for describing a method of controlling a virtual reality device, according to an embodiment of the present disclosure.
FIG. 3 is a detailed flowchart of an operation of setting a first area and a second area in a space in which content is viewed, according to an embodiment of the present disclosure.
FIG. 4 is a diagram illustrating an example of a procedure for setting a first area and a second area in a space in which content is viewed, on a screen of a virtual reality device, according to an embodiment of the present disclosure.
FIG. 5 is a diagram for describing an area range of a first area according to a type of content in a virtual reality device, according to an embodiment of the present disclosure.
FIG. 6 is a detailed flowchart of an operation of setting a first area and a second area in a space in which content is viewed, according to an embodiment of the present disclosure.
FIG. 7 is a diagram illustrating an example of a procedure for setting a first area and a second area in a space in which content is viewed, on a screen of a virtual reality device, according to an embodiment of the present disclosure.
FIG. 8 is a detailed flowchart of an operation of setting a first area and a second area in a space in which content is viewed, according to an embodiment of the present disclosure.
FIG. 9 is a diagram illustrating an example of a procedure for setting a first area and a second area in a space in which content is viewed, on a screen of a virtual reality device, according to an embodiment of the present disclosure.
FIG. 10 is a detailed flowchart of an operation of tracking an object located in a first area or a second area, according to an embodiment of the present disclosure.
FIG. 11 is a detailed flowchart of an operation of controlling screen display of a virtual reality device, according to an embodiment of the present disclosure.
FIG. 12 is a diagram illustrating a virtual reality device controlling screen display according to whether an object is located in a first area and a second area, according to an embodiment of the present disclosure.
FIG. 13 is a diagram illustrating an example in which a virtual reality device tracks an object by performing communication with a device of the object located in a second area, and displays an indicator corresponding to the object on a content reproduction screen, according to an embodiment of the present disclosure.
FIG. 14 is a block diagram for describing a configuration of a virtual reality device, according to an embodiment of the present disclosure.
FIG. 15 is a block diagram for describing a configuration of a server for performing communication with a virtual reality device, according to an embodiment of the present disclosure.

### Mode for Invention

The terms used in the present specification will be briefly defined, and the present disclosure will be described in detail. Throughout the present disclosure, the expression "at least one of a, b or c" indicates only a, only b, only c, both a and b, both a and c, both b and c, all of a, b, and c, or variations thereof.

Although the terms used in the present disclosure are selected from among common terms that are currently widely used in consideration of their functions in the present disclosure, the terms may vary according the intention of one of ordinary skill in the art, a precedent, or the advent of new technology. Also, in particular cases, the terms are discretionally selected by the applicant of the present disclosure, and the meaning of those terms will be described in detail in the corresponding part of the detailed description. Therefore, the terms used in the present disclosure are not merely designations of the terms, but the terms are defined based on the meaning of the terms and content throughout the present disclosure.

As used herein, the singular forms are intended to include the plural forms as well, unless the context clearly indicates otherwise. Unless otherwise defined, all terms including technical or scientific terms used herein may have the same meanings as commonly understood by one of ordinary skill in the art of the present specification. It will be understood that, although the terms "first", "second", etc. may be used in the present specification to describe various elements, these elements should not be limited by these terms. The terms are only used to distinguish one element from another element.

Throughout the specification, when a part "includes" or "comprises" an element, unless there is a particular description contrary thereto, the part can further include other elements, not excluding the other elements. Also, the terms such as "unit," "module," or the like used in the specification indicate a unit, which processes at least one function or operation, and the unit or the module may be implemented by hardware or software, or by a combination of hardware and software.

Hereinafter, an embodiment of the present disclosure will be described in detail with reference to the accompanying drawings to allow one of skill in the art to easily implement the embodiment. The present disclosure may, however, be embodied in many different forms and should not be construed as being limited to an embodiment set forth herein.

Hereinafter, the present disclosure will be described in detail with reference to the drawings.

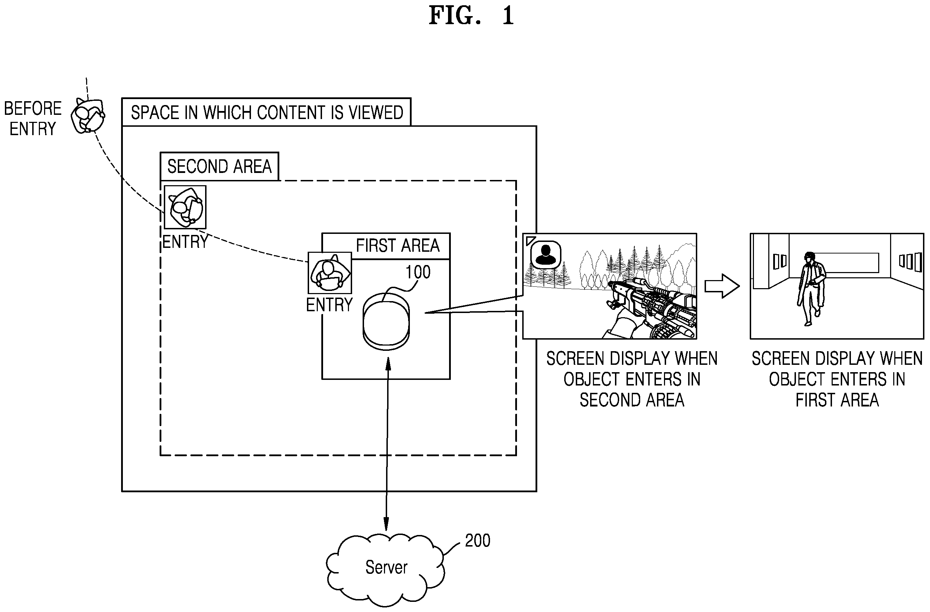

FIG. 1 is a diagram illustrating a virtual reality device 100 controlling screen display of the virtual reality device 100 when an object approaches while a user wearing the virtual reality device 100 watches content via the virtual reality device 100, according to an embodiment of the present disclosure.

In the present disclosure, the virtual reality device 100 is a device capable of expressing a virtual reality. The 'virtual reality' indicates that a virtual image is also displayed in a digital environment space of a virtual world, or an image corresponding to a real world object and a virtual image are displayed together. The virtual reality device 100 may be in the form of a head-mounted display (HMD) apparatus or a virtual reality helmet.

A server 200 provides a virtual reality service or a virtual reality service based content to the virtual reality device 100. The server 200 may receive information related to the virtual reality service from the virtual reality device 100, or may transmit information related to the virtual reality service to the virtual reality device 100. The server 200 may provide a platform for the virtual reality service, and may provide the virtual reality service or the virtual reality service based content to the virtual reality device 100 of a user who is registered in the virtual reality service or subscribes to the virtual reality service. The virtual reality devices 100 may transmit and receive information with each other via the server 200, and the virtual reality devices 100 within a preset range may be connected to each other via direction communication with each other.

Referring to FIG. 1, the virtual reality device 100 according to an embodiment of the present disclosure may set different areas in a space in which content is viewed, and may track an object in the set areas. The virtual reality device 100 may control a screen display of the virtual reality device 100, according to whether an object is present in a first area or a second area which is set in the space in which content is viewed. The first area is a space with a size required for a user wearing the virtual reality device 100 to immersively watch or experience content, and corresponds to an immersive area. The second area is a preset space for the user wearing the virtual reality device 100 to recognize an approach of an external object, and corresponds to a safe area.

Referring to what is shown in FIG. 1, when the user wears the virtual reality device 100 and plays a game, the virtual reality device 100 may sense the first area and the second area which are set in the space in which content is viewed. As the user wearing the virtual reality device 100 is in a light-shielded state in which an external environment is not seeable, the virtual reality device 100 may sense a surrounding environment by using a camera, a microphone, etc.

When an object such as another user outside the second area enters the second area, the virtual reality device 100 may detect and track the object in the second area. When the virtual reality device 100 recognizes that the object enters the second area, the virtual reality device 100 may identify the object and may display information about the identified object on a part of a game screen, thereby informing the user. While the user wears the virtual reality device 100, the user may recognize the object located in the second area.

When the object located in the second area enters the first area, the virtual reality device 100 may recognize that the object enters the first area, and may switch the game screen to a see-through full screen and display the switched screen. The virtual reality device 100 may end the game screen, and instead, may photograph a real world by using a camera of the virtual reality device 100 and display the real world on a display of the virtual reality device 100 in real time. The user may recognize the external environment while the user wears the virtual reality device 100.

Hereinafter, a method of controlling the virtual reality device 100 so as to control a screen display of the virtual reality device 100 according to whether an external object enters preset areas set in a space in which content is viewed, and to recognize an object entering the preset areas while the virtual reality device 100 is worn on a user, and the virtual reality device 100 performing the method will now be described.

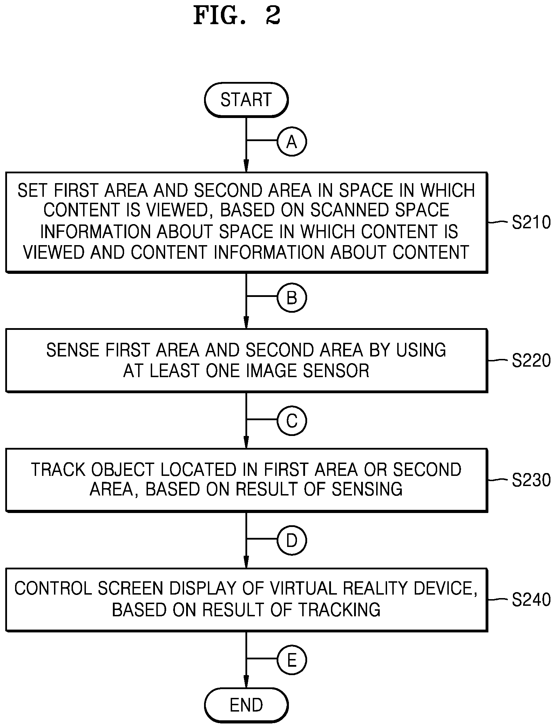

FIG. 2 is a flowchart for describing a method of controlling the virtual reality device 100, according to an embodiment of the present disclosure.

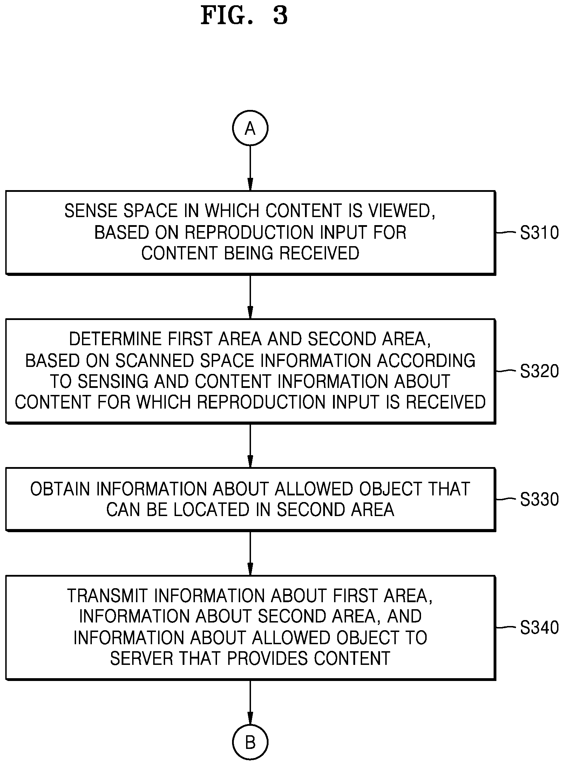

The virtual reality device 100 may set a first area and a second area different from the first area in a space in which content is viewed, based on scanned space information about the space in which the content is viewed and content information about the content (S210). The virtual reality device 100 may provide content of various fields including movie, education, sports, game, etc. The scanned space information is information obtained by scanning the space for surrounding topography or a surrounding object by using at least one sensor, wherein the user wearing the virtual reality device 100 watches the content in the space. An area range of the first area may vary according to a type of the content, and the second area may have a preset area range outside the first area. For convenience of descriptions, in an embodiment of the present disclosure, an example in which a total of two areas including the first area and the second area will now be described, but the present disclosure is not limited thereto, and a total of N areas from the first area up to N areas may be set. In a case where the virtual reality device 100 sets the total of N areas in a space in which content is viewed, whenever an object enters each area, screen display of the virtual reality device 100 may be differently controlled. Hereinafter, with reference to FIGS. 3 to 9, a procedure for setting a first area and a second area in a space in which content is viewed will now be described in detail.

FIG. 3 is a detailed flowchart of an operation of setting a first area and a second area in a space in which content is viewed, according to an embodiment of the present disclosure.

With reference to FIG. 3, an example in which the virtual reality device 100 directly senses a space in which content is viewed, by using at least one image sensor, will now be described.

The virtual reality device 100 may sense the space in which the content is viewed, based on a reproduction input for the content being received (S310). The virtual reality device 100 may sense a surrounding environment, by using an image sensor such as a camera or a LiDAR included in the virtual reality device 100.

For example, the virtual reality device 100 may scan the space in which the content is viewed, by using at least one image sensor. The virtual reality device 100 may obtain depth information from a scanned image. The virtual reality device 100 may obtain a three-dimensional scan result about the space in which the content is viewed, by using a depth map including depth information and a plurality of captured images. As another example, the virtual reality device 100 may obtain the three-dimensional scan result by using a plurality of captured images of the space in which the content is viewed.

The virtual reality device 100 may determine a first area and a second area, based on scanned space information according to the sensing and content information about the content for which the reproduction input is received (S320). The virtual reality device 100 may determine an area range of the first area and an area range of the second area, based on the scanned space information obtained by scanning the space in which the content is viewed, and the content information about the content selected by a user. The content information about the content may include a title of the content, a type or field of the content, a method of watching or experiencing the content, a distance requested for immersion in the content, a safety distance requested for safely executing the content, etc. The content information about the content may be included in a form of metadata in an execution file of an application corresponding to each content, or may be obtained from substance of the content or an external device. For example, the virtual reality device 100 may analyze the content selected by the user, and may set the first area by determining whether the user wearing the virtual reality device 100 moves much or requests a large area while the content is being reproduced. The virtual reality device 100 may set the first area, and then may set the second area to a larger preset area.

Furthermore, the virtual reality device 100 may obtain information about an allowed object that can be located in the second area (S330). The user of the virtual reality device 100 may have registered object information with respect to an object that is expected or allowed to enter the second area. The object information may object identification information, image information such as an image or an avatar of the object, affiliation information of the object, etc.

The virtual reality device 100 may transmit information about the first area, information about the second area, and the obtained information about the allowed object to the server 200 that provides content (S340). By storing the information in the server 200, the virtual reality device 100 may simply and rapidly process a process of setting the first area and the second area when reproducing the same or similar content.

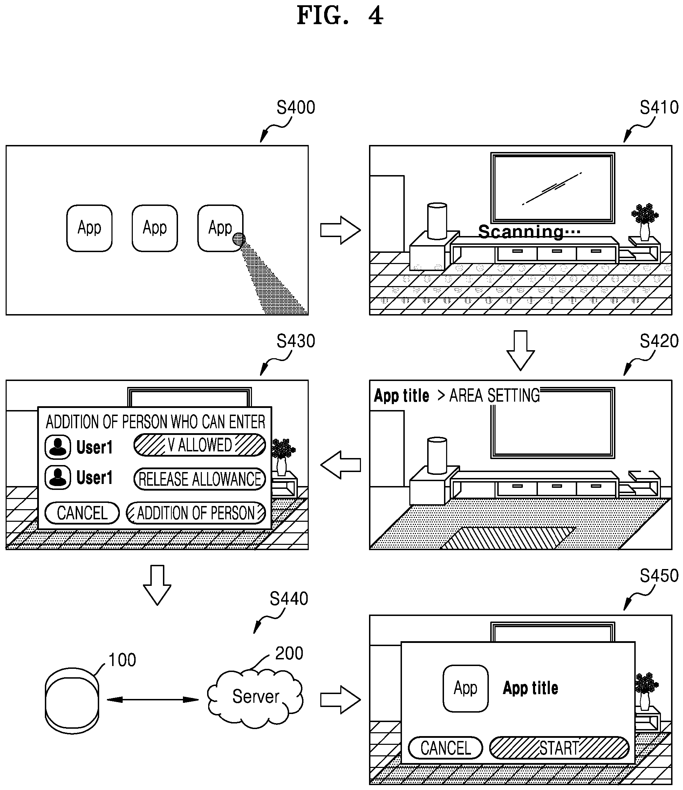

FIG. 4 is a diagram illustrating an example of a procedure for setting a first area and a second area in a space in which content is viewed, on a screen of the virtual reality device 100, according to an embodiment of the present disclosure.

Referring to FIG. 4, a user wearing the virtual reality device 100 may execute an application corresponding to content to be reproduced from among a plurality of pieces of content in various fields and genres in a home screen displayed on a display of the virtual reality device 100 (S400).

Before the virtual reality device 100 reproduces the user-selected content, the virtual reality device 100 may obtain scanned space information by sensing a space in which the content is viewed (S410).

The virtual reality device 100 may set the first area and the second area in the space in which the content is viewed, based on the obtained scanned space information and content information about the content selected according to a user input (S420).

The user wearing the virtual reality device 100 may register information about an allowed object that is expected or allowed to enter the second area (S430). The user wearing the virtual reality device 100 may add or remove an allowed object, and may input information about an allowed object.

The virtual reality device 100 may transmit information about a set area or the information about the allowed object to the server 200 that provides the content selected according to the user input (S440). Afterward, when the user of the virtual reality device 100 requests again the server 200 for execution of the content, the virtual reality device 100 may receive the information about the set area or the information about the allowed object from the server 200, and thus, may replace operations of S410 to S440.

The virtual reality device 100 may set the first area and the second area in the space in which the content is viewed, and then may display a content reproduction screen, according to a content reproduction start request from the user (S450). While the content is being reproduced, the virtual reality device 100 may sense the first area and the second area by detecting a surrounding environment by using at least one sensor.

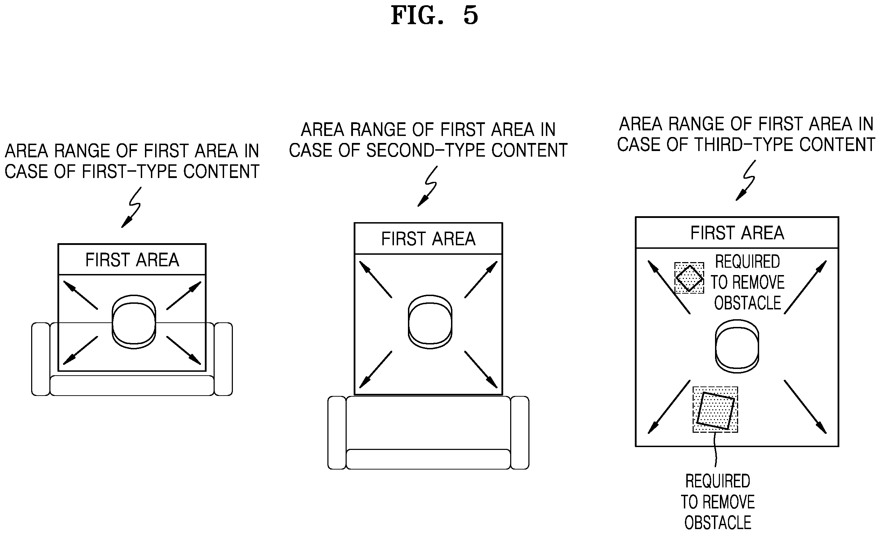

FIG. 5 is a diagram for describing an area range of a first area according to a type of content in the virtual reality device 100, according to an embodiment of the present disclosure.

Referring to FIG. 5, it is apparent that the area range of the first area may vary, according to a type of the content. For example, in a case of first-type content including a movie, a racing game, etc., the virtual reality device 100 may consider a real-world object such as a chair on which the user may sit, and may set the first area by considering an area corresponding to the chair. As another example, in a case of a second-type content including a dance or rhythm game, the virtual reality device 100 may set the first area around a location of the user wearing that virtual reality device 100. In this regard, when an obstacle is present in the first area to be set, the virtual reality device 100 may change and set the first area, and may induce the user wearing the virtual reality device 100 to enter the set first area. As another example, in a case of a third-type content including a boxing or sandbox-type game, the user requires lots of movements, and thus, in order to ensure the first area with a large range, the virtual reality device 100 may induce the user wearing the virtual reality device 100 to put away an obstacle.

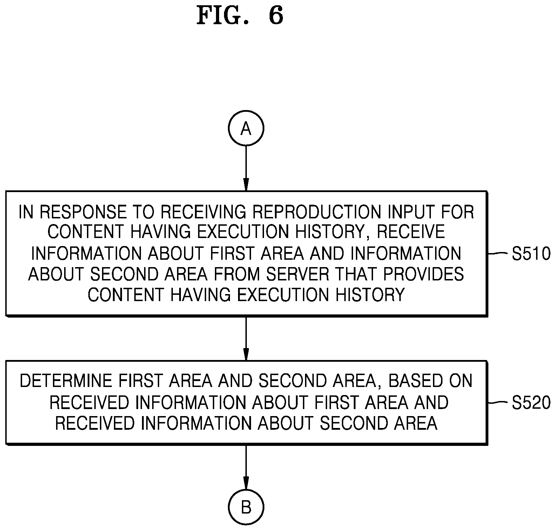

FIG. 6 is a detailed flowchart of an operation of setting a first area and a second area in a space in which content is viewed, according to an embodiment of the present disclosure.

FIG. 6 shows an example in which the virtual reality device 100 receives, from the external server 200, information requested for setting a first area and a second area, and sets the first area and the second area.

In response to receiving a reproduction input for content having an execution history, the virtual reality device 100 may receive information about the first area and information about the second area from the server 200 that provides the content having the execution history (S510). For example, when there is user selection for content being equal or similar to content that was previously executed, the virtual reality device 100 may request the information about the first area and the information about the second area from the server 200 providing the content. The server 200 obtains the information about the first area and the information about the second area which are stored in the server 200, in response to the request from the virtual reality device 100, and may transmit them to the virtual reality device 100.

The virtual reality device 100 may determine the first area and the second area, based on the information about the first area and the information about the second area which are received from the server 200 (S520). In this case, without a procedure for scanning a space in which content is viewed or analyzing user-selected content, an area range of the first area and an area range of the second area may be determined.

The virtual reality device 100 may further receive information about a pre-registered allowed object from the server 200. The virtual reality device 100 may check whether an object located in the second area is an object pre-registered as an allowed object, by using the allowed object information received from the server 200.

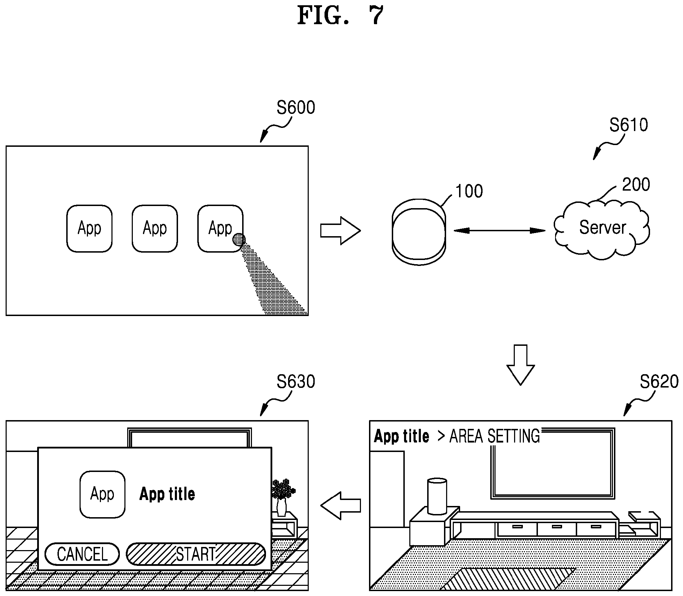

FIG. 7 is a diagram illustrating an example of a procedure for setting a first area and a second area in a space in which content is viewed, on a screen of the virtual reality device 100, according to an embodiment of the present disclosure.

Referring to FIG. 7, a user wearing the virtual reality device 100 may execute an application corresponding to content to be reproduced from among a plurality of pieces of content in various fields and genres in a home screen displayed on a display of the virtual reality device 100 (S600).

In response to receiving a reproduction input for content having an execution history, the virtual reality device 100 may perform communication with the server 200 that provides the content having the execution history. The virtual reality device 100 may receive information about a first area and information about a second area from the server 200 that provides the content having the execution history (S610).

The virtual reality device 100 may set the first area and the second area, based on the information about the first area and the information about the second area which are received from the server 200 (S620).

The virtual reality device 100 may set the first area and the second area in the space in which the content is viewed, and then may display a content reproduction screen, according to a content reproduction start request from the user (S630). While the content is being reproduced, the virtual reality device 100 may sense the first area and the second area by detecting a surrounding environment by using at least one sensor.

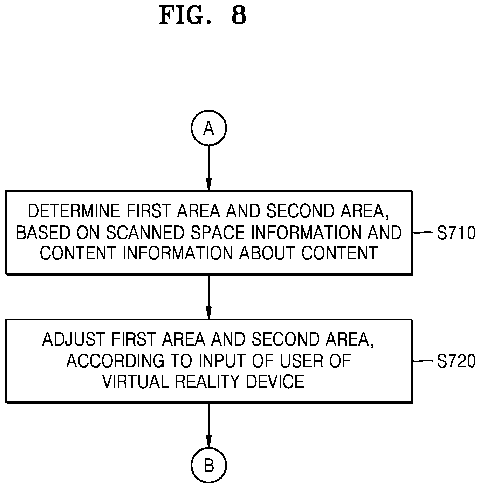

FIG. 8 is a detailed flowchart of an operation of setting a first area and a second area in a space in which content is viewed, according to an embodiment of the present disclosure.

In response to receiving a reproduction input for content, the virtual reality device 100 may determine a first area and a second area, based on scanned space information obtained by sensing, by using at least one image sensor, a space in which the content is viewed, and content information about the content for which the reproduction input is received (S710).

The virtual reality device 100 may adjust the first area and the second area, according to an input of a user of the virtual reality device 100 (S720). According to a user input, the virtual reality device 100 may manually adjust the first area and the second area which were automatically determined.

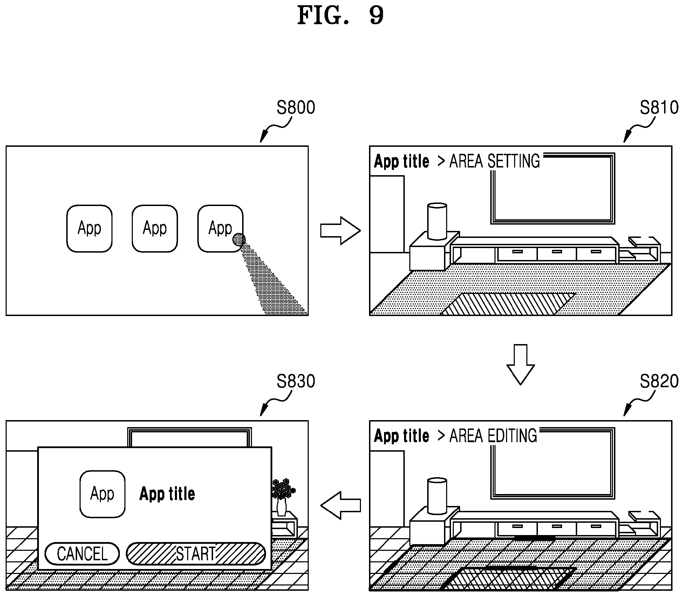

FIG. 9 is a diagram illustrating an example of a procedure for setting a first area and a second area in a space in which content is viewed, on a screen of the virtual reality device 100, according to an embodiment of the present disclosure.

Referring to FIG. 9, a user wearing the virtual reality device 100 may execute an application corresponding to content to be reproduced from among a plurality of pieces of content with various fields and genres in a home screen displayed on a display of the virtual reality device 100 (S800).

The virtual reality device 100 may determine a first area and a second area, based on scanned space information obtained by sensing a space in which the content is viewed, and content information about the content for which a reproduction input is received (S810).

The virtual reality device 100 may specify and display the first area and the second area which are automatically determined, may provide a tool for editing the first area and the second area, and may receive an input of adjusting the first area and the second area from the user (S820).

The virtual reality device 100 may set the first area and the second area in the space in which the content is viewed, and then may display a content reproduction screen, according to a content reproduction start request from the user (S830). While the content is being reproduced, the virtual reality device 100 may sense the first area and the second area by detecting a surrounding environment by using at least one sensor.

Referring back to FIG. 2, the virtual reality device 100 may sense the first area and the second area by using at least one image sensor (S220). The virtual reality device 100 may sense the first area and the second area by using the image sensor provided at an upper part, a front surface and a rear surface, or a side part of the virtual reality device 100. Also, the virtual reality device 100 may obtain a sound or a voice which occurs in a surround environment, by using the microphone.

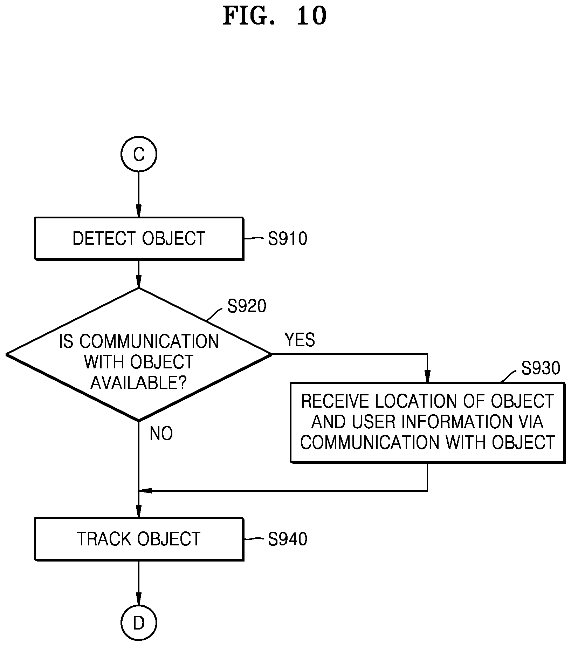

The virtual reality device 100 may track an object located in the first area or the second area, based on a result of the sensing (S230). Hereinafter, this will now be described in detail with reference to FIG. 10.

FIG. 10 is a detailed flowchart of an operation of tracking an object located in a first area or a second area, according to an embodiment of the present disclosure.

The virtual reality device 100 may detect an object, based on a result of sensing using at least one image sensor (S910). Also, the virtual reality device 100 may detect the object, additionally based on a sound or a voice obtained by using the microphone. For example, the virtual reality device 100 may identify a direction in which the sound or the voice has occurred, and may identify a strength of the sound or the voice. The virtual reality device 100 may determine a location of the object, and a distance from the virtual reality device 100, based on the direction and the strength of the sound or the voice.

When the detected object is located in the second area, the virtual reality device 100 may determine whether communication with a device of the object located in the second area is available (S920).

As a result of the determination, when the communication with the device of the object located in the second area is available, the virtual reality device 100 may receive object location information and user information from the device of the detected object (S930). However, as the detected object does not have the device or the communication may not be available even with the device, S920 and S930 may be processes that can be skipped.

When the communication with the device of the object located in the second area is not available, the virtual reality device 100 may track the detected object, based on the result of sensing, and when the communication is available, the virtual reality device 100 may track the detected object, based on the result of sensing and the object location information and the user information received from the device of the detected object (S940).

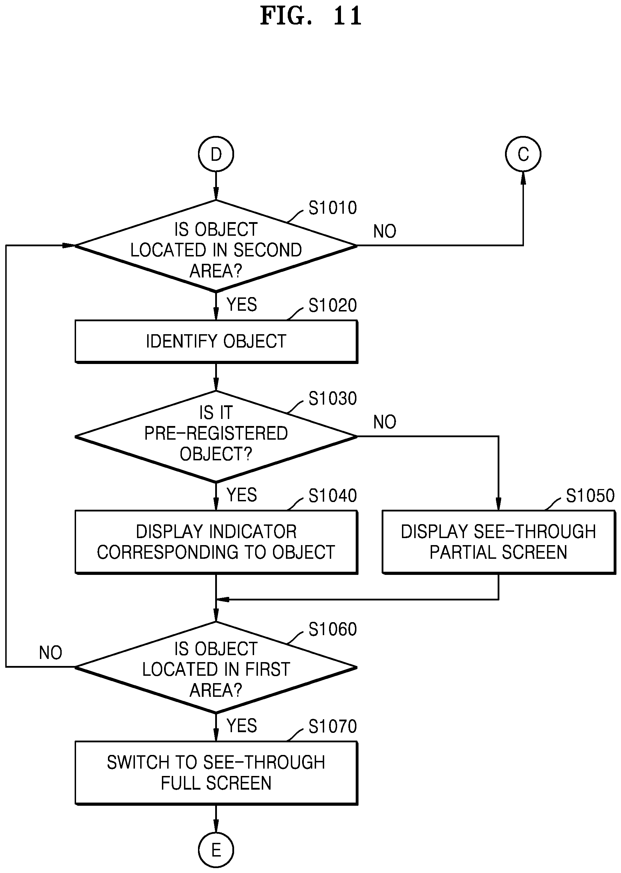

Referring back to FIG. 2, the virtual reality device 100 may control screen display of the virtual reality device 100, based on a result of the tracking (S240). Hereinafter, this will now be described in detail with reference to FIGS. 11 to 13.

FIG. 11 is a detailed flowchart of an operation of controlling screen display of the virtual reality device 100, according to an embodiment of the present disclosure.

The virtual reality device 100 may determine whether a tracked object is located in a first area or a second area, and may display a screen of the virtual reality device 100, according to a screen display mode based on a result of the determination. FIG. 11 will now be described, on the assumption that, after a user checks that an external object that may interrupt immersion in content is not present in a space in which the user watches the content, the user wears the virtual reality device 100 and watches the content.

The virtual reality device 100 may determine whether an object is located in the second area (S1010). The virtual reality device 100 may determine whether a tracked object enters the second area. When there is no object that has entered the second area, the virtual reality device 100 may continuously detect and track an object from a result of sensing the first area and the second area.

When an object is located in the second area, the virtual reality device 100 may identify the object (S1020). For example, the virtual reality device 100 may obtain an image via at least one image sensor, and may identify the object, according to classification information and appearance information of the object, based on feature information extracted from the obtained image. For example, the virtual reality device 100 may input feature vectors to an image classification model, an object localization model, an object detection model, etc. which include a deep neural network (DNN), a convolutional neural network (CNN), a recurrent neural network (RNN), a bidirectional recurrent deep neural network (BRDNN), etc., thereby performing target classification, appearance information measurement, objection detection, or the like. The virtual reality device 100 may classify an object according to image classification, may measure appearance information by localizing the object with a bounding box, and thus, may identify the object. Also, the virtual reality device 100 may identify an object, based on utterance content of the object which is obtained via the microphone. For example, the virtual reality device 100 may obtain identification information such as a relation with the user of the virtual reality device 100, a name of the object, etc. from the utterance content of the object.

The virtual reality device 100 may determine whether the identified object is an object pre-registered as an allowed object (S1030). The user of the virtual reality device 100 may have registered object information with respect to the object that is expected or allowed to enter the second area. The virtual reality device 100 may compare information of the identified object with information of the allowed object, and thus, may determine whether the identified object is a pre-registered object.

When the identified object is the pre-registered object, the virtual reality device 100 may display an indicator corresponding to the object on a content reproduction screen (S1040). As the identified object is the allowed object, the virtual reality device 100 may generate the indicator corresponding to the identified object, based on the identification information of the object pre-registered as the allowed object, image information such as a photo or an avatar of the object, affiliation information of the object, etc., and may display the indicator on a part of the content reproduction screen. The indicator may be in the form of an icon or a thumbnail.

When the identified object is not the pre-registered object, the virtual reality device 100 may display a see-through partial screen on the content reproduction screen (S1050). As the virtual reality device 100 cannot identify information about the identified object, the virtual reality device 100 may display the see-through partial screen on a part of the content reproduction screen for the user to directly identify the object located in the second area.

The virtual reality device 100 may determine whether the object is located in the first area (S1060). The virtual reality device 100 may determine whether the tracked object enters from the second area to the first area. When there is no object that has entered the first area, the virtual reality device 100 may continuously track the object located in the second area, and may continuously display information about the identified object on a part of the content reproduction screen.

When the tracked object has entered from the second area to the first area, and thus, is located in the first area, the virtual reality device 100 may switch the content reproduction screen to a see-through full screen and display the object (S1070). As a situation in which the user cannot immerse in the content occurs, the virtual reality device 100 may end the content reproduction screen, and may display the see-through full screen for the user to check an external environment or the object while the user is wearing the virtual reality device 100.

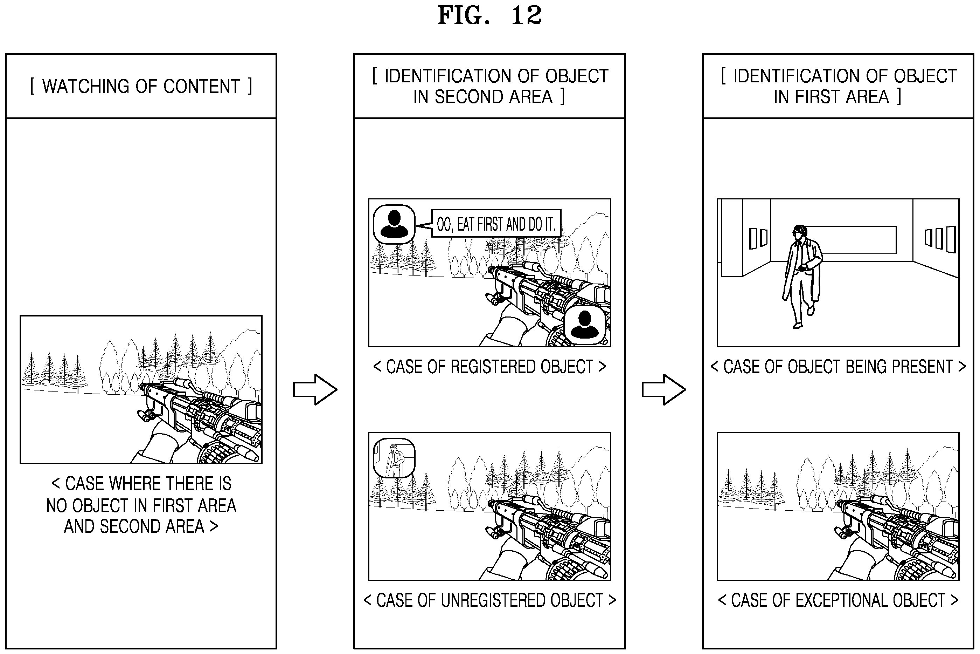

FIG. 12 is a diagram illustrating the virtual reality device 100 controlling screen display according to whether an object is located in a first area and a second area, according to an embodiment of the present disclosure.

The virtual reality device 100 may provide user-selected content on a display of the virtual reality device 100, according to a content reproduction start request from a user wearing the virtual reality device 100. Accordingly, the user wearing the virtual reality device 100 may immerse in and watch the content in a light-shielded mode in which the user cannot see an external environment.

Referring to FIG. 12, when there is no object located in the first area or the second area in a space in which the content is viewed, the virtual reality device 100 may display only a content reproduction screen so that the user can continuously immerse in the content.

When an object is identified in the second area in the space in which the content is viewed, the virtual reality device 100 may display a screen of the virtual reality device 100 from among screen display modes of two types, according to whether the object is a pre-registered object.

When the identified object is a registered object, the virtual reality device 100 may display an indicator corresponding to the object on the content reproduction screen. The indicator may be generated, based on identification information of the object, image information such as a photo or an avatar of the object, affiliation information of the object, etc. The indicator may be displayed on a part of the content reproduction screen, and a location of the indicator on the content reproduction screen may be determined based on a location, a movement direction, and a movement speed of the identified object. For example, when the identified object is located in a north direction in the second area and then moves in a west direction, the indicator is displayed to be located in the north direction in the content reproduction screen and then is moved in the west direction. As illustrated in FIG. 12, when two objects are located in the second area, indicators respectively corresponding to the objects may be displayed on corresponding locations of the content reproduction screen, in consideration of locations of the objects.

When the identified object is not a pre-registered object, the virtual reality device 100 may display a see-through partial screen on the content reproduction screen. The see-through partial screen may be displayed on a part of the content reproduction screen, and a location of the see-through partial screen on the content reproduction screen may be determined, based on a location, a movement direction, and a movement speed of the identified object. For example, when the identified object is located in a south direction in the second area and then moves in an east direction, the see-through partial screen is displayed to be located in the south direction in the content reproduction screen and then is moved in the east direction.

When an object is identified in the first area in the space in which the content is viewed, the virtual reality device 100 may switch and display the content reproduction screen to a see-through full screen. The virtual reality device 100 may end the content reproduction screen, and may display the see-through full screen for the user to check an external environment or the object while the user is wearing the virtual reality device 100. However, when the object located in the first area corresponds to an object registered as an exceptional object, for example, when the object is a pet such as a dog or a cat, the virtual reality device 100 does not switch to the see-through full screen by performing exception processing, and may maintain the content reproduction screen or may display an indicator corresponding to the exceptional object on the content reproduction screen.

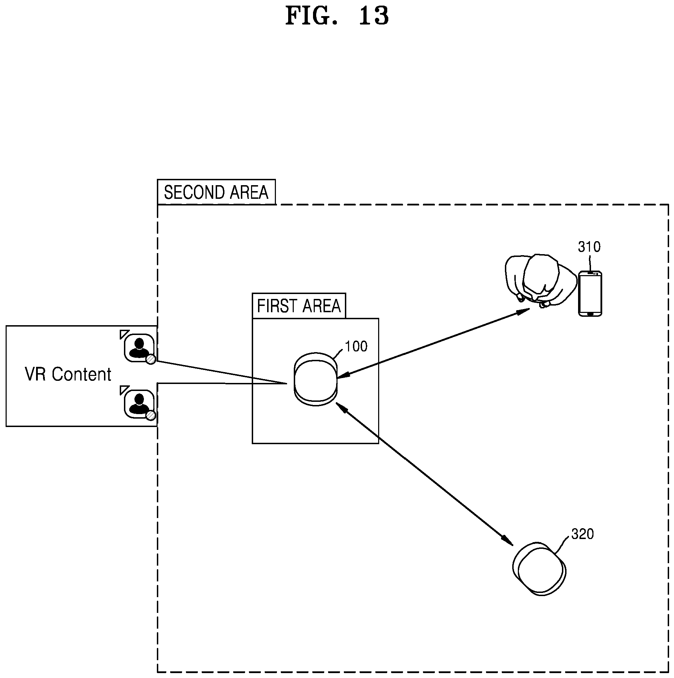

FIG. 13 is a diagram illustrating an example in which the virtual reality device 100 tracks an object by performing communication with a device of the object located in a second area, and displays an indicator corresponding to the object on a content reproduction screen, according to an embodiment of the present disclosure.

When the object is located in the second area, the virtual reality device 100 may determine whether it is available to communicate with the device of the object, and as a result of the determine, when it is available to communicate with the device of the object located in the second area, the virtual reality device 100 may receive location information of the object and user information from the device of the object. Based on a sensing result and the location information of the object and the user information which are received from the device of the detected object, the virtual reality device 100 may display the indicator corresponding to the object on a part of the content reproduction screen.

Referring to FIG. 13, a first object and a second object have entered the second area, and the virtual reality device 100 may transmit a message as to whether it is possible to perform communication, to a device 310 (e.g., a smartphone) of the first object and a device 320 (e.g., a virtual reality device) of the second object, and may receive response messages corresponding thereto. As illustrated in FIG. 13, object device information may be additionally displayed at a bottom right of indicators respectively corresponding to the first object and the second object, but the present disclosure is not limited thereto. A location of the indicator on the content reproduction screen may be determined, based on a location, a movement direction, and a movement speed of the identified object.

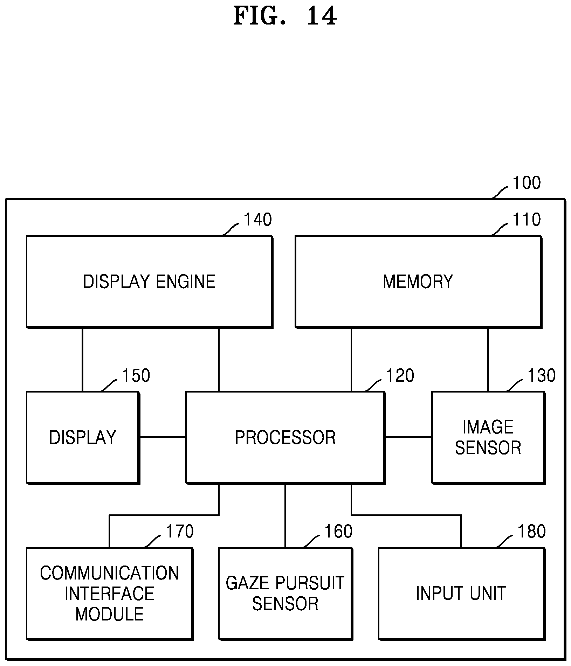

FIG. 14 is a block diagram for describing a configuration of the virtual reality device 100, according to an embodiment of the present disclosure. What are described above with respect to the method of controlling the virtual reality device 100 may be changelessly applied to the virtual reality device 100 even though they are not described below.

Referring to FIG. 14, the virtual reality device 100 may include a memory 110, a processor 120, an image sensor 130, a display engine 140, a display 150, a gaze pursuit sensor 160, a communication interface module 170, and an input unit 180. In addition, a location sensor for sensing a location of the virtual reality device 100 or a power supply for supplying power to the virtual reality device 100 may be further included, and it is obvious to one of ordinary skill in the art related to an embodiment of the present disclosure that other general-purpose elements other than elements shown in FIG. 14 may be further included.

The memory 110 may store instructions that are executable by the processor 120. The memory 110 may store a program consisting of instructions. The memory 110 may include at least one type of hardware devices including a random access memory (RAM), a static RAM (SRAM), a read-only memory (ROM), a flash memory, an electrically erasable programmable ROM (EEPROM), a programmable ROM (PROM), a magnetic memory, a magnetic disk, and an optical disk.

The memory 110 may store at least one software module including instructions. Each software module may be executed by the processor 120 to cause the virtual reality device 100 to perform a preset operation or function. For example, a space sensing module, an object tracking module, a screen display control module, etc. may be executed by the processor 120, but the present disclosure is not limited thereto, and other software modules may be further included.

The processor 120 may execute instructions stored in the memory 110 or a programmed software module to control an operation or function performed by the virtual reality device 100. The processor 120 may be configured as a hardware element for performing arithmetic, logic, and input and output computations, signal processing.

The processor 120 may be configured as at least one of a central processing unit (CPU), a microprocessor, a graphic processor unit, application specific integrated circuits (ASICs), digital signal processors (DSPs), digital signal processing devices (DSPDs), programmable logic devices (PLDs), field programmable gate arrays (FPGAs), an application processor, a neural processing unit, or an artificial intelligence-dedicated processor designed to have a hardware structure specialized for processing an artificial intelligence model, but the present disclosure is not limited thereto. Each of processors constituting the processor 120 may be a dedicated processor for performing a preset function.

The image sensor 130 may be a device for capturing a real-world scene, and may be stereo cameras or a single camera. Also, the image sensor 130 may be a depth camera for sensing depth information or a sensor in the form of a LiDAR. The virtual reality device 100 may include the image sensor 130 in plural to respectively corresponding to functions. For example, a first camera for three-dimensionally (3D) scanning a real-world object, a second camera for performing capturing in a direction with a specific angle, a third camera for obtaining depth information, etc. may be included.

The virtual reality device 100 may control screen display via the display engine 140 and the display 150. A virtual image may be generated via an optical engine, and may include both a static image and a dynamic image. The virtual image may be an image shown to a user via the virtual reality device 100 in a virtual space, and may be an image of content, a real-world object image captured by capturing a real-world scene, or an image indicating information or a control menu with respect to an operation of the virtual reality device 100.

The display engine 140 may include an optical engine for generating and projecting a virtual image, and a guide unit for leading, to the display 150, light of the virtual image projected from the optical engine.

The display 150 may display the image of content, the real-world object image, or a virtual image such as the image indicating the information or the control menu with respect to the operation of the virtual reality device 100. When the virtual image is displayed via the display 150, a user wearing the virtual reality device 100 may manipulate the virtual image via the image sensor 130, the gaze pursuit sensor 160, or the input unit 180 so as to manipulate the virtual image.

The gaze pursuit sensor 160 may detect gaze information including a gaze direction in which user's eyes gaze, pupil locations of the user's eyes, coordinates of a center point of each pupil, or the like. For example, the gaze pursuit sensor 160 may detect a pupil from an image captured by receiving received light by irradiating infrared light to an eye of the user, and thus, may pursue its movement. The processor 120 may determine an eye movement form, based on the gaze information of the user which is detected by the gaze pursuit sensor 160. For example, the processor 120 may determine various forms of eye movements including fixation of gazing one point, pursuit of tracking a moving object, saccade of rapidly moving a gaze from one gaze point to another gaze point, etc. The processor 120 of the virtual reality device 100 may determine a gaze point of the user or gaze movement of the user by using the gaze pursuit sensor 160, and thus, may use them in control of the virtual reality device 100.

The communication interface module 170 may be connected to a device located outside the virtual reality device 100, and thus, may transmit information obtained or generated by the virtual reality device 100 to the device located outside or may receive various types of information from the device located outside. For example, the device located outside may be the server 200 or a user terminal (not shown). The communication interface module 170 may perform communication with other device or a network. To do so, the communication interface module 170 may include a communication module configured to support at least one of various communication methods. For example, the communication module configured to perform short-range communication such as wireless fidelity (Wi-Fi), Bluetooth, etc., various types of mobile communication, or ultra wideband communication.

The input unit 180 may receive an input of the user of the virtual reality device 100. For example, the input unit 180 may be a touch screen, a microphone for receiving voice of the user, or a motion sensor for sensing a motion of the user, but the present disclosure is not limited thereto. According to an embodiment, the input unit 180 may be replaced in a manner that the input of the user is received by using the image sensor 130 and the display engine 140. For example, the processor 120 may obtain gaze coordinates, based on the gaze information obtained using the gaze tracking sensor 160. The processor 120 may recognize a gesture of selecting a virtual image corresponding to the gaze coordinates, based on an image captured via the image sensor 130.

According to the configuration, the processor 120 according to an embodiment of the present disclosure may execute one or more instructions stored in the memory 110 to control all operations for controlling the virtual reality device 100.

The processor 120 according to an embodiment of the present disclosure or a first processor configuring the processor 120 may execute the space sensing module to set a first area and a second area different from the first area in a space in which content is viewed, based on scanned space information about the space in which the content is viewed and content information about the content. The processor 120 or the first processor may sense the first area and the second area by using at least one image sensor 130. The first area may be determined based on the scanned space information and the content information, and the second area may be determined based on the scanned space information.

According to an embodiment, the processor 120 or the first processor may sense the space in which the content is viewed, by using the at least one image sensor 130, based on a reproduction input for the content being received via the input unit 180. The processor 120 or the first processor may determine the first area and the second area, based on the scanned space information according to the sensing and the content information about the content for which the reproduction input is received. Also, the processor 120 or the first processor may obtain, via the input unit 180, information about an allowed object that can be located in the second area. The processor 120 or the first processor may transmit, via the communication interface module 170, information about the first area, information about the second area, and the obtained information about the allowed object to the server 200 that provides content.

According to an embodiment, in response to receiving, via the input unit 180, a reproduction input for content having an execution history, the processor 120 or the first processor may receive, via the communication interface module 170, information about the first area and information about the second area from the server 200 that provides the content having the execution history. The processor 120 or the first processor may determine the first area and the second area, based on the received information about the first area and the received information about the second area. In a case where the server 200 stores a content watching history of the virtual reality device 100, when there is a request for content with a watching history from the virtual reality device 100, the server 200 may look up the information about the first area and the second area which were previously set, and may transmit the information to the virtual reality device 100. In this case, the virtual reality device 100 may skip some processes of setting the first area and the second area.

According to an embodiment, the processor 120 or the first processor may determine the first area and the second area, based on the scanned space information and the content information about the content, and may adjust the first area and the second area, according to an input of the user of the virtual reality device 100 via the input unit 180. The processor 120 or the first processor may differently set an area range of the first area, according to a type of the content included in the content information.

According to an embodiment of the present disclosure, the processor 120 or a second processor configuring the processor 120 may execute the object tracking module, and may track an object located in the first area or the second area, based on a result of sensing the first area and the second area. The processor 120 or the second processor may sequentially detect the object in the first area or the second area, and thus, may identify a current location, a movement direction, and a movement speed of the object.

According to an embodiment, the processor 120 or the second processor may detect the object, and may determine whether it is available to communicate with a device of the object located in the second area. As a result of the determination, when the communication with the device of the object located in the second area is not available, the processor 120 or the second processor may track the detected object, based on the sensing result, and when the communication is available, the processor 120 or the second processor may track the detected object, based on the sensing result, and location information of the object and user information which are received from the device of the object via the communication interface module 170.

According to an embodiment, the processor 120 or a third processor configuring the processor 120 may execute the screen display control module, and may control a screen display of the virtual reality device 100, by using the display engine 140 and the display 150, based on a result of tracking an object located in the first area or the second area.

According to an embodiment, the processor 120 or the third processor may determine whether the object is located in the first area or the second area. The processor 120 or the third processor ma display a screen of the virtual reality device 100 by controlling the display engine 140 and the display 150, according to a screen display mode based on a result of the determination.

According to an embodiment, when the object is located in the second area, the processor 120 or the third processor may identify the object, and thus, may determine whether the identified object is an object pre-registered as an allowed object. When the identified object is the pre-registered object, the processor 120 or the third processor may display an indicator corresponding to the object on a content reproduction screen, and when the identified object is not the pre-registered object, the processor 120 or the third processor may control the display engine 140 and the display 150 to display a see-through partial screen on the content reproduction screen. The processor 120 or the third processor may determine a location of the indicator or the see-through partial screen on the content reproduction screen, based on a location, a movement direction, and a movement speed of the identified object.

According to an embodiment, when the object is located in the first area, the processor 120 or the third processor may control the display engine 140 and the display 150 to switch the content reproduction screen to a see-through full screen. When the content reproduction screen is switched to the see-through full screen, the content being reproduced may be ended, and an image obtained by capturing a real-world may be displayed on the display 150 of the virtual reality device 100 in real time so as to cause a user wearing the virtual reality device 100 to have a feeling of directly seeing a real-world scene.

When the user wearing the virtual reality device 100 checks the object having entered the first area via the see-through full screen, and then performs an input or a gesture for reproducing the content again, the see-through full screen may be switched to the content reproduction screen. Here, the indicator or the see-through partial screen may be displayed on the content reproduction screen according to user's setting, or may not be displayed on the content reproduction screen for the user not to mind the already-checked object.

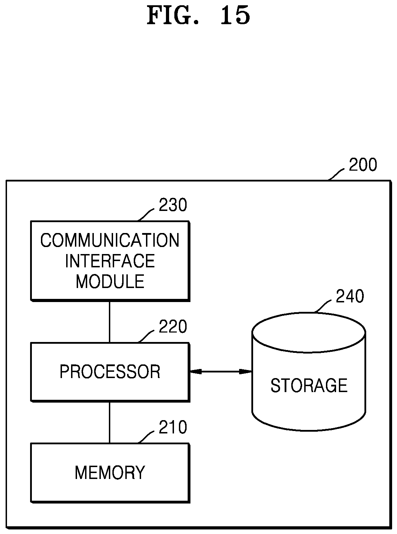

FIG. 15 is a block diagram for describing a configuration of the server 200 for performing communication with the virtual reality device 100, according to an embodiment of the present disclosure.

Referring to FIG. 15, the server 200 includes a memory 210, a processor 220, a communication interface module 230, and storage 240. It is obvious to one of ordinary skill in the art related to an embodiment that other general-purpose elements other than elements shown in FIG. 15 may be further included.

Each element of the block diagram of FIG. 15 may be separated, added, or skipped, according to implementation of the server 200. For example, according to an implementation scheme, one element may be divided into two or more elements, two or more elements may be combined into one element, and some elements may be further added or removed.

The server 200 is a device for providing a virtual reality service, and may provide a virtual reality service platform. Alternatively, the server 200 is a device for providing content, and may provide content based on the virtual reality service.

The memory 210 may store instructions that are executable by the processor 220. The memory 210 may store software or a program.

The processor 220 may execute the instructions stored in the memory 210. The processor 220 may perform overall control of the server 200. The processor 220 may obtain information and requests received via the communication interface module 230, and may store the received information in the storage 240. Also, the processor 220 may process the received information. For example, the processor 220 may perform an operation of obtaining information to be used in a second external device from information received from a first external device or processing the received information. Also, the processor 220 may transmit the information received from the first external device to the second external device.

The communication interface module 230 may perform communication with an external device such as the virtual reality device 100. The server 200 may receive information related to a virtual reality service from the virtual reality device 100, and may transmit information related to a virtual reality service, in response to a request from the virtual reality device 100. For example, the server 200 may receive information about a first area, information about a second area, and information about an allowed object from the virtual reality device 100, and may store received information for each virtual reality device 100.

The storage 240 may store various items of software and information. For example, the storage 240 may store various items of data or information used in providing a program, an application, and a virtual reality service which are executed in the server 200.

The server 200 may serve as a medium device through which the virtual reality devices 100 within a preset range exchange information. To do so, the server 200 may previously register information about the virtual reality device 100 for each user in the storage 240, and may update information related to a virtual reality service. The server 200 may transfer a virtual reality service, to which information received from the virtual reality device 100 is reflected, to other virtual reality device 100.

Embodiments of the present disclosure may be embodied as a computer-readable recording medium, e.g., a program module to be executed in computers, which includes computer-readable instructions. The computer-readable recording medium may include any usable medium that may be accessed by computers, volatile and non-volatile medium, and detachable and non-detachable medium. Also, the computer-readable recording medium may include a computer storage medium and a communication medium. The computer storage medium includes all volatile and non-volatile media, and detachable and non-detachable media which are technically implemented to store information including computer-readable instructions, data structures, program modules or other data. The communication medium may include computer-readable instructions, a data structure, a program module, or other data such as modulation-type data signals.

Also, the computer-readable recording medium may be provided in the form of a non-transitory recording medium. Here, the term "non-transitory storage medium" may mean that the storage medium is a tangible device and does not include signals (e.g., electromagnetic waves), and may mean that data may be permanently or temporarily stored in the storage medium. For example, the "non-transitory storage medium" may include a buffer in which data is temporarily stored.

According to an embodiment, the method according to various embodiments of the present disclosure may be included and provided in a computer program product. The computer program product may be traded as a product between a seller and a buyer. The computer program product may be distributed in the form of a machine-readable storage medium (e.g., a compact disc read only memory (CD-ROM)) or may be distributed (e.g., downloaded or uploaded) online through an application store or directly between two user apparatuses (e.g., smartphones). In a case of online distribution, at least a portion of the computer program product (e.g., a downloadable application) may be at least temporarily stored or temporarily generated in a machine-readable storage medium such as a manufacturer's server, a server of an application store, or a memory of a relay server.

According to an embodiment of the present disclosure, a method of controlling the virtual reality device 100 is provided. The method of controlling the virtual reality device 100 may include setting a first area and a second area different from the first area in a space in which content is viewed, based on scanned space information about the space in which the content is viewed and content information about the content (S210). Also, the method of controlling the virtual reality device 100 may include sensing the first area and the second area by using the at least one image sensor 130 (S220). Also, the method of controlling the virtual reality device 100 may include tracking an object located in the first area or the second area, based on a result of the sensing (S230). Also, the method of controlling the virtual reality device 100 may include controlling screen display of the virtual reality device 100, based on a result of the tracking (S240).

According to an embodiment of the present disclosure, the controlling of the screen display of the virtual reality device 100 (S240) may include determining whether the object is located in the first area or the second area (S1010, S1060). Also, the controlling of the screen display of the virtual reality device 100 (S240) may include displaying a screen of the virtual reality device 100, according to a screen display mode based on a result of the determining (S1040, S1050, S1070).

Also, the displaying of the screen of the virtual reality device 100 (S1040, S1050, S1070) may include, when the object is located in the second area (S1010), identifying the object, and determining whether the identified object is an object pre-registered as an allowed object (S1020, S1030). Also, the displaying of the screen of the virtual reality device 100 (S1040, S1050, S1070) may include, based on a result of the determining, when the identified object is the pre-registered object, displaying an indicator corresponding to the object on a content reproduction screen, and when the identified object is not the pre-registered object, displaying a see-through partial screen on the content reproduction screen (S1040, S1050). Also, the displaying of the screen of the virtual reality device 100 (S1040, S1050, S1070) may include, when the object is located in the first area (S1060), switching the content reproduction screen to a see-through full screen (S1070).

Also, a location of the indicator or the see-through partial screen on the content reproduction screen may be determined based on a location, a movement direction, and a movement speed of the object.

According to an embodiment of the present disclosure, the tracking of the object (S230) may include detecting the object (S910). Also, the tracking of the object (S230) may include determining whether communication with a device of the object located in the second area is available (S920). Also, the tracking of the object (S230) may include, based on a result of the determining, when the communication with the device of the object located in the second area is not available, tracking the detected object, according to the result of the sensing, and when the communication with the device of the object located in the second area is available, tracking the detected object, according to the result of the sensing, and location information of the object and user information which are received from the device of the detected object (S930, S940).

According to an embodiment of the present disclosure, the setting of the first area and the second area different from the first area in the space in which the content is viewed (S210) may include sensing the space in which the content is viewed, based on a reproduction input for the content being received (S310, S410). Also, the setting of the first area and the second area (S210) may include determining the first area and the second area, based on the scanned space information according to the sensing and content information about the content for which the reproduction input is received (S320, S420).

Also, the setting of the first area and the second area (S210) may include obtaining information about an allowed object that can be located in the second area (S330, S430). Also, the setting of the first area and the second area (S210) may include transmitting information about the first area, information about the second area, and the obtained information about the allowed object to the server 200 that provides content (S340, S440).

According to an embodiment of the present disclosure, the setting of the first area and the second area different from the first area in the space in which the content is viewed (S210) may include, in response to receiving of a reproduction input for content having an execution history, receiving information about the first area and information about the second area from the server 200 that provides the content having the execution history (S510, S610). Also, the setting of the first area and the second area (S210) may include determining the first area and the second area, based on the received information about the first area and the received information about the second area (S520, S620).

According to an embodiment of the present disclosure, the setting of the first area and the second area different from the first area in the space in which the content is viewed (S210) may include determining the first area and the second area, based on the scanned space information and the content information about the content (S710, S810). Also, the setting of the first area and the second area (S210) may include adjusting the first area and the second area, according to an input of a user of the virtual reality device 100 (S720, S820).

According to an embodiment of the present disclosure, a computer-readable recording medium having recorded thereon a program for executing the method may be provided.

According to an embodiment of the present disclosure, the virtual reality device 100 is provided. The virtual reality device 100 may include the memory 110 storing one or more instructions, the processor 120, the at least one image sensor 130, the display engine 140, and the display 150. The processor 120 is configured to execute the one or more instructions to set a first area and a second area different from the first area in a space in which content is viewed, based on scanned space information about the space in which the content is viewed and content information about the content. Also, the processor 120 is configured to execute the one or more instructions to sense the first area and the second area by using the at least one image sensor 130. Also, the processor 120 is configured to execute the one or more instructions to track an object located in the first area or the second area, based on a result of the sensing. Also, the processor 120 is configured to execute the one or more instructions to control screen display of the virtual reality device 100 by using the display engine 140 and the display 150, based on a result of the tracking.

According to an embodiment of the present disclosure, the processor 120 may be configured to execute the one or more instructions to determine whether the object is located in the first area or the second area. Also, the processor 120 may be configured to display a screen of the virtual reality device 100 by controlling the display engine 140 and the display 150, according to a screen display mode based on a result of the determining.

Also, the processor 120 may be configured to execute the one or more instructions to, when the object is located in the second area, identify the object, and determine whether the identified object is an object pre-registered as an allowed object. The processor 120 may be configured to, based on a result of the determining, control the display engine 140 and the display 150 to display an indicator corresponding to the object on a content reproduction screen when the identified object is the pre-registered object, and display a see-through partial screen on the content reproduction screen when the identified object is not the pre-registered object. Also, the processor 120 may be configured to execute the one or more instructions to, when the object is located in the first area, control the display engine 140 and the display 150 to switch the content reproduction screen to a see-through full screen.

Also, the processor 120 may be configured to execute the one or more instructions to determine a location of the indicator or the see-through partial screen on the content reproduction screen, based on a location, a movement direction, and a movement speed of the identified object.

According to an embodiment of the present disclosure, the virtual reality device 100 may further include the communication interface module 170. Also, the processor 120 may be configured to execute the one or more instructions to detect the object, and determine whether communication with a device of the object located in the second area is available. The processor 120 may be configured to, based on a result of the determining, when the communication with the device of the object located in the second area is not available, track the detected object, according to the result of the sensing, and when the communication is available, track the detected object, according to the result of the sensing, and location information of the object and user information which are received via the communication interface module 170 from the device of the detected object.

According to an embodiment of the present disclosure, the virtual reality device 100 may further include the input unit 180. Also, the processor 120 may be configured to execute the one or more instructions to sense, by using the at least one image sensor 130, the space in which the content is viewed, based on a reproduction input for the content being received via the input unit 180. The processor 120 may be configured to determine the first area and the second area, based on the scanned space information according to the sensing and content information about the content for which the reproduction input is received.

Also, the virtual reality device 100 may further include the communication interface module 170. Also, the processor 120 may be configured to execute the one or more instructions to obtain, via the input unit 180, information about an allowed object that can be located in the second area. The processor 120 may be configured to transmit, via the communication interface module 170, information about the first area, information about the second area, and the obtained information about the allowed object to the server 200 that provides content.

According to an embodiment of the present disclosure, the virtual reality device 100 may further include the communication interface module 170 and the input unit 180. In response to receiving, via the input unit 180, a reproduction input for content having an execution history, the processor 120 may be configured to execute the one or more instructions to receive, via the communication interface module 170, information about the first area and information about the second area from the server 200 that provides the content having the execution history. The processor 120 may be configured to determine the first area and the second area, based on the received information about the first area and the received information about the second area.

According to an embodiment of the present disclosure, the virtual reality device 100 may further include the input unit 180. The processor 120 may be configured to execute the one or more instructions to determine the first area and the second area, based on the scanned space information and the content information about the content, and may adjust the first area and the second area, according to an input of the user of the virtual reality device 100 via the input unit 180.

According to an embodiment of the present disclosure, the processor 120 may be configured to execute the one or more instructions to differently set an area range of the first area, according to a type of the content included in the content information.

It is obvious to one of ordinary skill in the art that the descriptions of the present disclosure are exemplary and the present disclosure may be easily embodied in many different forms without changing the technical concept or essential features of the present disclosure. Thus, it should be understood that the embodiments described herein should be considered in a descriptive sense only and not for purposes of limitation. For example, configuring elements that are singular forms may be executed in a distributed fashion, and also, configuring elements that are distributed may be combined and then executed.

The scope of the present disclosure is defined by the appended claims, rather than the detailed description, and all differences and modifications that can be derived from the meanings and scope of the claims and other equivalent embodiments therefrom will be construed as being included in the present disclosure.

## Claims

1. A method of controlling a virtual reality device, the method comprising:
based on scanned space information about a space in which content is viewed and content information about the content, setting a first area and a second area different from the first area in the space (S210);
sensing the first area and the second area by using at least one image sensor (S220);
tracking an object located in the first area or the second area, based on a result of the sensing (S230); and
controlling screen display of the virtual reality device, based on a result of the tracking (S240).

2. The method of claim 1, wherein the controlling of the screen display (S240) comprises:
determining whether the object is located in the first area or the second area (S1010, S1060); and
displaying a screen of the virtual reality device, according to a screen display mode based on a result of the determining (S1040, S1050, S1070).

3. The method of claim 1 or 2, wherein the displaying of the screen of the virtual reality device (S1040, S1050, S1070) comprises:
when the object is located in the second area (S1010),
identifying the object, and determining whether the identified object is an object pre-registered as an allowed object (S1020, S1030); and
based on a result of the determining, when the identified object is the pre-registered object, displaying an indicator corresponding to the object on a content reproduction screen, and when the identified object is not the pre-registered object, displaying a see-through partial screen on the content reproduction screen (S1040, S1050), and
when the object is located in the first area (S1060),
switching the content reproduction screen to a see-through full screen (S1070).

4. The method of any one of claims 1 to 3, wherein a location of the indicator or the see-through partial screen on the content reproduction screen may be determined based on a location, a movement direction, and a movement speed of the identified object.

5. The method of any one of claims 1 to 4, wherein the tracking of the object (S230) comprises:
detecting the object (S910);
determining whether communication with a device of the object located in the second area is available (S920); and
based on a result of the determining, when the communication is not available, tracking the detected object, according to the result of the sensing, and when the communication is available, tracking the detected object, according to the result of the sensing, and location information of the object and user information which are received from the device of the detected object (S930, S940).

6. The method of any one of claims 1 to 5, wherein the setting (S210) comprises:
sensing the space in which the content is viewed, based on a reproduction input for the content being received (S310, S410); and
determining the first area and the second area, based on the scanned space information according to the sensing and the content information about the content for which the reproduction input is received (S320, S420).

7. The method of any one of claims 1 to 6, wherein the setting (S210) further comprises:
obtaining information about an allowed object that can be located in the second area (S330, S430); and
transmitting information about the first area, information about the second area, and the obtained information about the allowed object to a server that provides content (S340, S440).

8. The method of any one of claims 1 to 7, wherein the setting (S210) further comprises:
in response to receiving a reproduction input for content having an execution history, receiving information about the first area and information about the second area from a server that provides the content having the execution history (S510, S610); and
determining the first area and the second area, based on the received information about the first area and the received information about the second area (S520, S620).

9. The method of any one of claims 1 to 8, wherein the setting (S210) further comprises:
determining the first area and the second area, based on the scanned space information and the content information about the content (S710, S810); and
adjusting the first area and the second area, according to an input of a user of the virtual reality device (S720, S820).

10. A computer-readable recording medium having recorded thereon a program for executing the method of any one of claims 1 to 9.

11. A virtual reality device (100) comprising:
a memory (110) storing one or more instructions;
a processor (120);
at least one image sensor (130);
a display engine (140); and
a display (150),
wherein the processor (120) is configured to execute the one or more instructions to,
based on scanned space information about a space in which content is viewed and content information about the content, set a first area and a second area different from the first area in the space, sense the first area and the second area by using the at least one image sensor (130), track an object located in the first area or the second area, based on a result of the sensing, and control screen display of the virtual reality device (100) by using the display engine (140) and the display (150), based on a result of the tracking.

12. The virtual reality device (100) of claim 11, wherein the processor (120) is configured to execute the one or more instructions to determine whether the object is located in the first area or the second area, and display a screen of the virtual reality device (100) by controlling the display engine (140) and the display (150), according to a screen display mode based on a result of the determining.

13. The virtual reality device (100) of claim 11 or 12, wherein the processor (120) is configured to execute the one or more instructions to,
when the object is located in the second area, identify the object, determine whether the identified object is an object pre-registered as an allowed object, and based on a result of the determining, control the display engine (140) and the display (150) to display an indicator corresponding to the object on a content reproduction screen when the identified object is the pre-registered object, and display a see-through partial screen on the content reproduction screen when the identified object is not the pre-registered object, and
when the object is located in the first area, control the display engine (140) and the display (150) to switch the content reproduction screen to a see-through full screen.

14. The virtual reality device (100) of any one of claims 11 to 13, further comprising:
a communication interface module (170),
wherein the processor (120) is configured to execute the one or more instructions to
detect the object, determine whether communication with a device of the object located in the second area is available, based on a result of the determining, when the communication is not available, track the detected object, according to the result of the sensing, and when the communication is available, track the detected object, according to the result of the sensing, and location information of the object and user information which are received via the communication interface module (170) from the device of the detected object.

15. The virtual reality device (100) of any one of claims 11 to 14, further comprising:
an input unit (180),
wherein the processor (120) is configured to execute the one or more instructions to
sense, by using the at least one image sensor (130), the space in which the content is viewed, based on a reproduction input for the content being received via the input unit (180), and determine the first area and the second area, based on the scanned space information according to the sensing and the content information about the content for which the reproduction input is received.
